# EUROPÄISCHE PATENTSCHRIFT

(11) **EP 1 174 210 B1**
(45) Veröffentlichungstag und Bekanntmachung des Hinweises auf die Patenterteilung: **13.04.2005**
(21) Anmeldenummer: 01116982.8
(22) Anmeldetag: 12.07.2001
(51) Int. Cl.: B23P 15/02, B23C 3/18

(54) **Verfahren und Rohling zum Herstellen von rhomboidischen Schaufeln für axiale Strömungsmaschinen**
Method and blank for manufacturing rhomboidal blades for axial-flow fluid machines
Procédé et ébauche pour fabriquer des aubes rhomboidales pour machines axiales a fluide

(30) Priorität: 20.07.2000 DE 10035224
(43) Veröffentlichungstag der Anmeldung: 23.01.2002
(73) Patentinhaber: MAN TURBO AG, 46145 Oberhausen (DE)
(72) Erfinder: Brock, Hans-Egon, 46147 Oberhausen (DE)
(74) Vertreter: Radünz, Ingo, Dipl.-Ing.

(56) Entgegenhaltungen:
- GB-A- 624 815
- GB-A- 817 660
- US-A- 2 959 843
- DATABASE WPI Derwent Publications Ltd., London, GB; AN 1979-41888B XP002233143 & SU 617 144 A (PERM MOTOR CONS WKS), 17. Juli 1978 (1978-07-17)
- VOIGTLAENDER O: "DAS HERSTELLEN VON SCHAUFELN FUER STROEMUNGSMASCHINEN" INDUSTRIE ANZEIGER, LEINFELDEN-ECHTERDINGEN, DE, Bd. 91, Nr. 40, 13. Mai 1969 (1969-05-13), Seiten 18-23, XP001105675

## Beschreibung

Die Erfindung betrifft ein Verfahren zum Herstellen von rhomboidischen Schaufeln für axiale Strömungsmaschinen mit den Merkmalen des Oberbegriffes des Patentanspruches.

Rhomboidische Schaufeln werden als Laufschaufeln und Leitschaufeln in axialen Strömungsmaschinen, wie Turbinen und Axialverdichter, eingesetzt. Diese rhomboidischen Schaufeln sind gekennzeichnet durch einen Schaufelfuß, dessen Querschnitt die Form eines Rhomboids oder Parallelogramms mit gleich oder paarweise ungleich langen Seiten aufweist. Der Vorteil dieser Querschnittsform liegt darin, dass im Vergleich zu Schaufeln mit einem rechteckigen Schaufelfuß mehr Schaufeln auf dem Umfang des Rotors oder des Stators der axialen Strömungsmaschine untergebracht werden können.

Seit jeher wurde bei der Fertigung der Schaufeln beim Maschinenhersteller von einem warmgewalzten, rechteckigen Flachstahl oder einem Breitflachstahl ausgegangen, aus dem durch spanende Bearbeitung die Schaufel aus dem Vollen herausgearbeitet wird. Der rechteckige Flach- bzw. Breitflachstahl ist walztechnisch einfach und damit kostengünstig herzustellen. Bei Abnahme bestimmter Mindestmengen ist der Hersteller bereit, Abmessungen nach Kundenwunsch zu liefern. In allen Stäben muss aus Festigkeitsgründen die Schaufellänge immer in Walzrichtung angeordnet werden. Im Normalfall wird nach den maximalen Abmessungen der Schaufel plus Bearbeitungszugabe der rechteckige Flachstahl bestimmt. Es ist dabei nur eine Schaufel im Stab angeordnet. Der rechteckige Flachstahl wird dann rundum in die gewünschte rhomboidische Schaufelquerschnittsform bearbeitet. Je nach Größe des Rhomboidwinkels muß sehr viel zerspant werden, bis man den gewünschten Schaufelrohling erhält.

Kleinere Schaufeln werden bei einigen Maschinenherstellern aus Breitflachstählen gefertigt. Hierbei sind mehrere Schaufeln nebeneinander im Stab angeordnet. Durch schräge Sägeschnitte wird der Breitflachstahl, entsprechend der Schaufelzahl, in mehrere rhomboidische Teile gesägt, die anschließend auf die Maße des gewünschten Schaufelrohlings gefräst werden. Der Vorteil der Breitflachstähle ist deren flexible Anwendung auf mehrere Schaufeltypen und die damit verbundene Einsparung von Lagerkosten. Durch die Möglichkeit, den Breitflachstahl in Rhomboidstäbe zu sägen, werden Material- und Bearbeitungskosten gegenüber der Fertigung aus einem normalen Flachstahl gespart. Nachteilig ist der insgesamt immer noch zu hohe Aufwand an Bearbeitungszeit für das Sägen und Fräsen der Stäbe.

Aus der GB 817 660 A ist ein Verfahren zur Herstellung einer rhomboidischen Schaufel für eine Gasturbine bekannt, bei dem von einem Rohling ausgegangen wird, der durch Extrusion hergestellt ist. Dieser Rohling hat eine Länge, die der Länge der Schaufel, gegebenenfalls verlängert um die für die Bearbeitung notwendigen Einspannenden, entspricht. Der Querschnitt des Rohlings weist die Form eines Rhomboides auf, das der Form des Querschnittes des rhomboidischen Schaufelfußes angepasst und allseitig nur um die Mindestbearbeitungszugabe größer ist als der maximale Querschnitt der Schaufel. Gleichzeitig mit der Herstellung des Rohlings durch Extrusion werden die Längsbohrungen im Inneren der Schaufel geformt. Erst danach wird der Rohling spanend bearbeitet.

In der SU 617 144 A ist ein Verfahren zur Herstellung von Turbinenschaufeln beschrieben, bei dem ein Ausgangsstab von rhomboidischem Querschnitt erhitzt und gewalzt wird. Der Ausgangsstab wird in Einzelabschnitte (Rohlinge) zerlegt, die erneut erhitzt, dann kalibriert und durch Walzen in die endgültige Form der Schaufel gebracht werden.

Der Erfindung liegt die Aufgabe zugrunde, ein Verfahren bereit zu stellen, mit deren Hilfe es möglich wird, die rhomboidischen Schaufeln von axialen Strömungsmaschinen unter einem geringeren Kostenaufwand herzustellen.

Die Aufgabe wird bei einem gattungsgemäßen Verfahren erfindungsgemäß durch die kennzeichnenden Merkmale des Patentanspruches gelöst.

Gemäß der Erfindung wird ein stangenförmiges Vormaterial von rhomboidischem Querschnitt durch Warmwalzen hergestellt, das in der Herstellung teurer ist als ein Walzgut von rechteckigem Querschnitt. Erst in der speziellen Anwendung auf die Herstellung von Schaufeln als Laufschaufeln und Leitschaufeln von axialen Strömungsmaschinen bringt dieses Vormaterial den entscheidenden Kostenvorsprung, da es an die rhomboidische Schaufelform angepasst ist. Dadurch wird der Fertigungsaufwand verringert, um die Schaufel auf die gewünschte Endabmessung durch Fräsen aus dem Vollen zu bringen.

Ein Ausführungsbeispiel der Erfindung ist in der Zeichnung dargestellt und wird im Folgenden näher erläutert. Es zeigen:
- Fig. 1: die Vorderansicht einer Laufschaufel,
- Fig. 2: die zu Fig. 1 gehörende Ansicht in Blickrichtung A,
- Fig. 3: die Draufsicht auf Fig. 1,
- Fig. 4: die Vorderansicht eines Rohlings zur Fertigung der Laufschaufel nach den Fig. 1 bis 3,
- Fig. 5: die zu Fig. 4 gehörende Ansicht in Blickrichtung B und
- Fig. 6: die Draufsicht auf Fig. 4.

Die Laufschaufel einer Turbine oder eines Axialverdichters besteht aus einem stromlinienförmig geformten Schaufelblatt 1 und aus einem Schaufelfuß 2. Der Schaufelfuß 2 hat eine konische Form, die im dargestellten Fall als Doppelhammerkopf ausgebildet ist. Mit den konischen Schaufelfüßen 2 werden die Laufschaufeln in einer angepassten, umlaufenden Nut des Rotors der Turbine gehalten, wobei die Schaufelfüße 2 dicht aneinander anliegen.

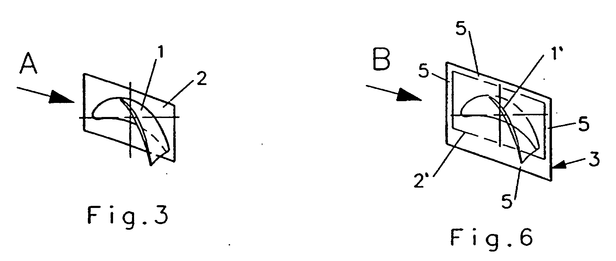

Der Querschnitt des Schaufelfußes 2 weist die Form eines Rhomboids oder Parallelogramms auf. Anstelle eines Rhomboids kann der Schaufelfuß auch die Form eines Rhombus zeigen. Der größte Schaufelquerschnitt ergibt sich bei allen Lauf- und Leitschaufeln von axialen Strömungsmaschinen generell aus der Draufsicht auf die Schaufel. Dabei wird aus den jeweils größten Abmessungen von Schaufelfuß 2, Schaufelblatt 1 sowie einer eventuell vorhandenen angefrästen Deckplatte am Profilende am Schaufelkopf der maximale Querschnitt gebildet. Bei der dargestellten Schaufel ergibt sich der Querschnitt aus der Fig. 3.

Die Leitschaufel der axialen Strömungsmaschine ist nicht dargestellt. Sie weist ebenfalls ein stromlinienförmig geformtes Schaufelblatt und einen konischen Schaufelfuß auf.

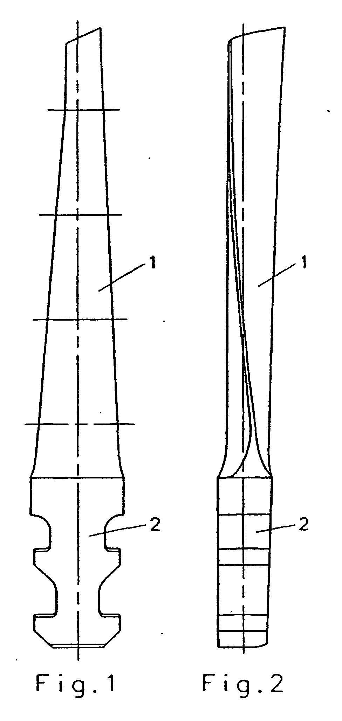

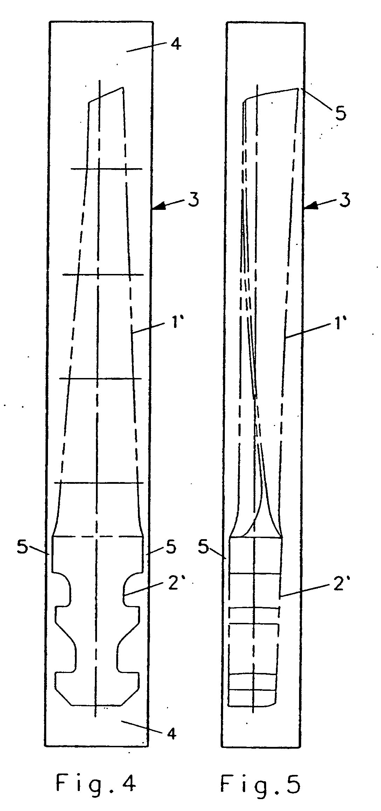

Die Schaufel wird dadurch hergestellt, dass die in den Fig. 1 bis 3 dargestellte Schaufelform aus einem Rohling 3 durch spanende Bearbeitung (Fräsen) aus dem Vollen herausgearbeitet wird. Der Rohling 3 ist in den Fig. 4 bis 6 gezeigt, wobei die Kontur des Schaufelblattes und des Schaufelfußes der herzustellenden Schaufel durch die Linien 1' und 2' angedeutet ist. Der Rohling 3 wird als Stab aus einem stangenförmigen, durch Warmumformung hergestellten Vormaterial abgetrennt. Die Länge des Rohlings 3 entspricht der Länge der Schaufel oder ist um die Einspannenden 4 größer als die Länge der Schaufel.

Die Querschnittsform des stangenförmigen Vormaterials ist dem Querschnitt des Schaufelfußes 2 angepasst und besteht ebenfalls aus einem Rhomboid mit den gleichen Seitenwinkeln wie der Schaufelfuß 2. Der Querschnitt des stangenförmigen Vormaterials ist allseitig nur um die Mindestbearbeitungszugabe 5 von z. B. 2 mm größer als der größte Querschnitt der Schaufel.

Bei der heute technologisch anspruchsvollsten Fertigungsvariante wird der Rohling 3 in eine mit fünf NC-Achsen gesteuerte Sturzfräsmaschine gespannt. Auf dieser Maschine ist es möglich, die Schaufel, das heißt das Schaufelblatt 1 und den Schaufelfuß 2, in einer Werkstückspannung, bis auf die beiden Einspannenden 4, komplett fertig zu fräsen. Durch die beschriebene Form des rhomboidischen Rohlings 3 verkürzt sich die Bearbeitungszeit auf der Fräsmaschine, weil die bei Verwendung rechteckiger Flachstähle bisher notwendigen Bearbeitungsschritte hin zum geforderten Rhomboid entfalten können.

Das stangenförmige Vormaterial, aus dem der Rohling gefertigt wird, wird durch Warmwalzen auf einer Walzstraße mit Walzen herstellt, die entsprechend der Querschnittsform des Rohlings kalibriert sind.

Für die Herstellung von warmgewalztem Vormaterial ist aus wirtschaftlichen und verfahrenstechnischen Gründen eine Mindestabnahmemenge durch den Maschinenhersteller erforderlich. Außerdem kann für einige Schaufelformen kein entsprechendes stangenförmiges Vormaterial durch Warmwalzen bereit gestellt werden. In den beiden genannten Fällen wird der Rohling daher ausgehend von einem Vormaterial bei der letzten Umformung durch Gesenkschmieden oder Warmpressen oder durch Formschmieden hergestellt. Beim Gesenkschmieden oder Warmpressen wird ein rhomboidförmiger Stab in einer mehrteiligen Hohlform durch Druckeinwirkung hergestellt. Die Länge des Stabes ist auf die Länge der Schaufel plus Bearbeitungszugabe abgestimmt. Beim Formschmieden wird eine zweiteilige, an beiden Seiten offene Matrize verwendet, die die Querschnittsform des Rohlings hat. Die Formgebung erfolgt durch das Ausstrecken des Werkstückes durch das Aneinanderreihen von Stauchdrücken mit quer zur Längsachse liegenden Pressbahnen. Durch die an beiden Seiten offene Matrize wird das zu dem Rohling verarbeitete Werkstück gleichmäßig hindurchgeführt. Beide Verfahren werden mit Hilfe von Hämmern oder Pressen durchgeführt.

## Patentansprüche

1. Verfahren zum Herstellen von rhomboidischen, aus einem Schaufelfuß (2) von rhomboidischem Querschnitt und aus einem Schaufelblatt (1) bestehenden Schaufeln für axiale Strömungsmaschinen, bei dem von einem durch Warmumformung hergestellten Rohling ausgegangen wird, dessen Querschnitt die Form eines Rhomboides aufweist, das der Form des Querschnittes des rhomboidischen Schaufelfußes (2) angepasst und allseitig nur um die Mindestbearbeitungszugabe (5) größer ist als der maximale Querschnitt der Schaufel und dessen Länge der Länge der Schaufel, gegebenenfalls verlängert um die für die Bearbeitung notwendigen Einspannenden (4) entspricht und bei dem die Schaufel aus dem Rohling (3) durch spanende Bearbeitung herausgearbeitet wird, **dadurch gekennzeichnet, daß** durch Warmwalzen ein stangenförmiges Vormaterial hergestellt wird, dessen Querschnitt dem Querschnitt des späteren Rohlings entspricht, dass der Rohling aus dem stangenförmigen Vormaterial (3) abgetrennt wird und dass jede Schaufel aus dem vollen Rohling gefertigt wird.

## Claims

1. Method of producing rhomboidal blades, which consist of a blade foot (2) of rhomboidal cross-section and of a blade vane (1), for axial flow machines, in which the starting point is a blank which is produced by hot reshaping and the cross-section of which has the form of a rhomboid, which is matched to the shape of the cross-section of the rhomboidal blade foot (2) and is greater at all sides than the maximum cross-section of the blade by only the minimum machining allowance (5) and the length of which corresponds with the length of the blade in a given case extended by the chucking ends (4) necessary for the machining and in which the blade is worked out of the blank (3) by cutting through machining, **characterised in that** a rod-shaped starting material, the cross-section of which corresponds with the cross-section of the later blank, is produced by hot rolling, that the blank is separated from the rod-shaped starting material (3) and that each blade is made from the solid blank.

## Revendications

1. Procédé de fabrication d'aubes rhomboïdales pour turbomachines axiales constituées d'un pied d'aube (2) de section transversale rhomboïdale et d'une pale (1), dans lequel on part d'une ébauche fabriquée par thermoformage dont la section transversale présente la forme d'un rhomboïde, qui est adaptée à la forme de la section transversale du pied d'aube rhomboïdal (2) et ne dépasse de tous côtés la section transversale maximale de l'aube que de la surépaisseur minimale d'usinage (5) et dont la longueur correspond à la longueur de l'aube, éventuellement prolongée des extrémités de serrage (4) requises pour l'usinage, et dans lequel l'aube est façonnée par usinage à partir de l'ébauche (3), **caractérisé en ce qu'**on fabrique par laminage à chaud un produit primaire en forme de barre dont la section transversale correspond à celle de l'ébauche ultérieure, qu'on sépare l'ébauche du produit primaire (3) en forme de barre et qu'on fabrique chaque aube à partir de l'ébauche entière.
